# EUROPEAN PATENT SPECIFICATION

(11) **EP 2 146 159 B1**
(45) Date of publication and mention of the grant of the patent: **07.11.2018**
(21) Application number: 08160356.5
(22) Date of filing: 14.07.2008
(51) Int. Cl.: F24S 20/67, F24S 25/40, F24S 25/615, H02S 20/23, E04D 13/18

(54) **Method for building a solar panel assembly on a slanted roof base**
Verfahren zur Herstellung einer Solarpaneelanordnung auf einer geneigten Dachbasis
Procédé pour construire un ensemble de panneau solaire sur une base de toit inclinée

(43) Date of publication of application: 20.01.2010
(73) Proprietor: Ubbink B.V., 6984 AA Doesburg (NL)
(72) Inventor: Lavrard Meyer, Michel Georges Florian, 44100, Nantes (FR); Boogaard, Maurits Alexander, 5403 PA, Uden (NL); Theunissen, Verius Leo Antonius, 6921 CX, Duiven (NL)
(74) Representative: Geurts, Franciscus Antonius

(56) References cited:
- EP-A- 0 009 472
- EP-A- 1 310 747
- WO-A-2007/138316
- FR-A- 1 335 470
- JP-A- 2002 030 774
- US-A- 2 369 487
- US-A- 5 482 569
- US-B1- 6 201 179

## Description

### BACKGROUND

The invention relates to a method for building a solar panel assembly on a slanted roof base, wherein the solar panel assembly comprises a solar panel holder that holds multiple solar panels. By a solar panel is meant a Photovoltaic (PV) panel for electricity, or a solar collector for heating water.

EP-A-1310747 discloses a method according to the preamble of claim 1 for building a solar panel assembly.

A known solar panel holder comprises a plate cover deck that is mounted to tile battens on a roof base. The plate cover deck is built up with rows and columns of cover plates that overlap in horizontal and vertical direction like the tiles on a roof. The cover plates are supplied to the roof as straight sheets that are nested onto each other, wherein under each solar panel in a row at least one cover plate is installed. This results in a large number of overlaps and therefore in redundancy in the use of the cover plate material.

An object of the invention is to provide a method for building up a plate cover deck in a cost effective manner.

### SUMMARY OF THE INVENTION

The invention provides a method for building a solar panel assembly on a slanted roof base, according to claim 1.

The cover plate from the roll extends continuously in horizontal direction, that is, without necessary overlaps in that horizontal direction, whereby the plate cover material can be applied in a cost effective manner.

In one embodiment the method comprises cutting off said first cover plate from the roll, whereby exactly the necessary stretch of cover plate material can be installed on the roof base.

Preferably, the solar panel holder comprises multiple of said elongated cover plates, extending parallel with the upper cover plate overlapping the lower cover plate, wherein the method comprises the step of supplying a second of said cover plate rolled up over its length to the roof base and rolling out the second cover plate over the roof base, partially over an longitudinally extending upper edge of said first cover plate. In this manner an endless number of cover plates can be installed, depending of the number of solar panels in the vertical or sloping direction of the roof.

In one embodiment the elongated ribs are hollow at their lower side that faces the roof base, wherein the method comprises aligning the elongated ribs of the first and second cover plate and partially nest the elongated ribs of the first cover plate into the elongated ribs of the second cover plate. The nesting of the elongated ribs keeps the ribs and therefore the cover plates aligned.

In one embodiment said second cover plate is formed by a rolled up and cut off remainder of the first cover plate. In this manner the supplied cover plate material can be applied in its entirety, without any portions to be disposed of from that roll.

In one embodiment the cover plate comprises a series of downwardly projecting hook notches close to its longitudinally extending upper edge, preferably between the ribs, that engage behind a roof lath or tile batten of the roof base, wherein the method comprises placing the hook notches against the roof lath or tile batten during the rolling out of that cover plate. The hook notches provide a fixation or alignment of the cover plate, at least temporary, in order to configure the solar panel holder on the roof base.

In one embodiment the cover plate is in itself pre-biased towards substantially its right stretched out condition, whereby the cover plate can start rolling out by itself due to its tendency towards its stretched out condition.

In one embodiment the cover plate as a roll is kept in that rolled up condition by means of a binder, wherein the method comprises taking off the binder after supply of the roll and just before rolling out the cover plate on the roof base. Combined with the pre-biasing towards substantially its right stretched out condition, the rolling out can start after taking off the binder.

In order to obtain a watertight plate cover deck, the cover plate is preferably watertight over its entire surface.

In one embodiment the elongated cover plate or overlapping cover plates are positioned over the roof base such that in a projection substantially perpendicular to the main plane of the adjacent solar panels the upper side and/or lower side and/or the lateral sides of the outline of the elongated cover plate or overlapping cover plates extend under or outwardly beyond the common outline of the solar panels to be installed. In this manner a fully watertight plate cover deck can be provided under the solar panels.

Preferably, the cover plate is formed as one single unity or mono-block, preferably formed by means of vacuum forming.

In one embodiment the cover plate alternately comprises the elongated gutter sections that continue into the upwardly extending ribs, wherein the gutter sections and the ribs preferably extend over the full lateral breadth of the cover plate. The alternation of the gutter sections and the ribs can distribute the bending properties of the cover plate evenly along its length, making it easy to roll it up and rolling it out along its length.

In one embodiment the cover plate is made of polyethylene, which is well bendable.

In one embodiment the solar panel assembly comprises elongated coupling assemblies mounted on the plate cover deck, wherein the method comprises mounting of the coupling assemblies on the first cover plate in order to permanently fix the cover plate on the roof base.

Preferably, the solar panels are coupled on the coupling assemblies after mounting the coupling assemblies on the cover plate.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1 shows the relevant portion of a slanted roof on which according to the invention an embodiment of a solar panel holder with multiple solar panels has been installed;
Figure 2 shows the roof according to figure 1 in more detail, with some solar panels taken away to show a plate cover deck of the solar panel holder;
Figures 3 and 4 show a first phase and a subsequent second phase respectively of the assembly of the solar panel holder on the roof;
Figure 5 shows a plane view of a part of the plate cover deck;
Figure 6 shows a cross section of the plate cover deck according to lines VI-VI of figure 5; and
Figure 7 shows an isometric view and a further detail thereof of a part of the plate cover deck .

### DETAILED DESCRIPTION OF THE INVENTION

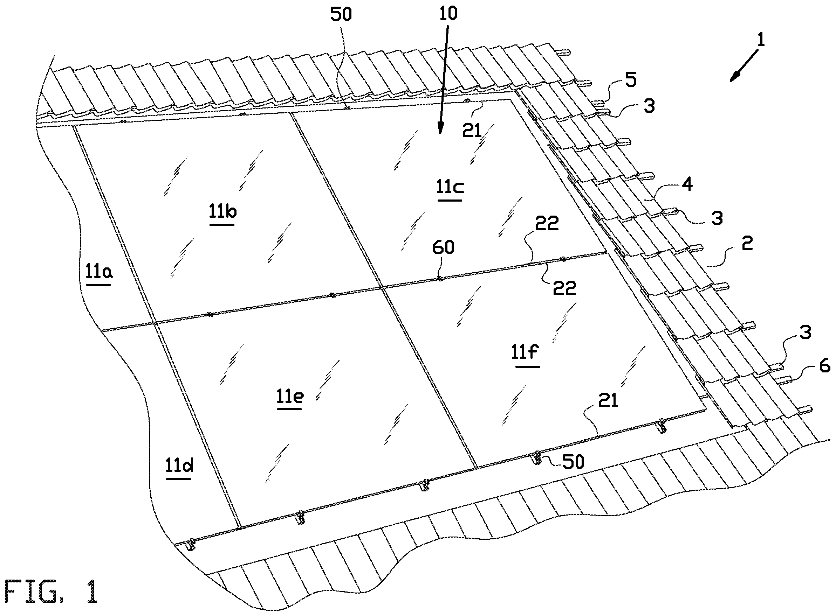

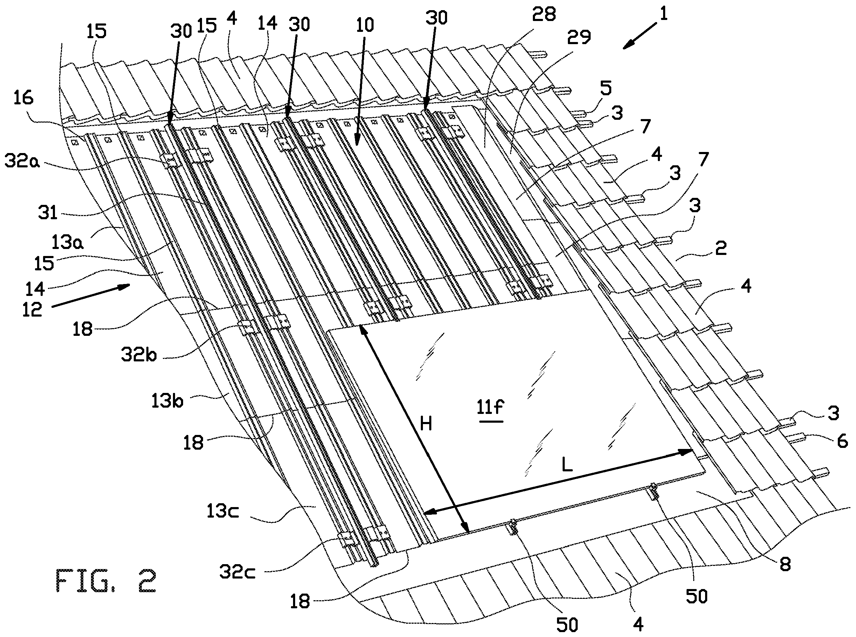

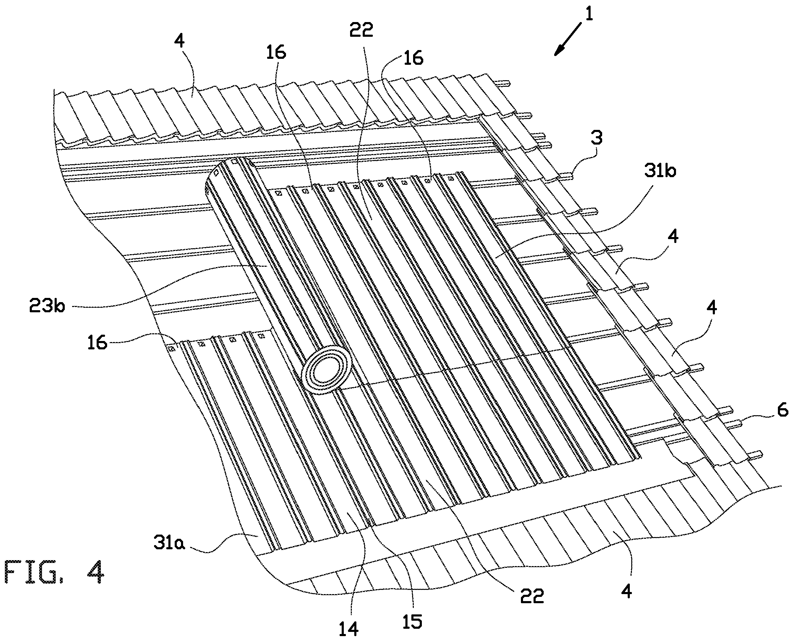

Figures 1-4 show a slanted roof 1 comprising a slanted roof boarding 2 that is provided with horizontally extending tile battens 3 where tiles 4 have been hooked on in a manner known per se. As best shown in figure 2 the tiles 4 have been arranged around a rectangular solar panel holder according to an embodiment of the invention. The solar panel holder 10 is mounted on the battens 3 and carries two rows with in this example three solar panels 11a-c, 11d-f attached thereon as shown in figure 1. In an alternative embodiment which is not shown, the solar panel holder 10 and the solar panels cover the full roof boarding 2, whereby the roof 1 has no tiles.

As best shown in figure 2, the solar panel holder 10 comprises a plate cover deck 12 which in this embodiment is built up with three elongated cover plates 13a-c with a rectangular outline. The cover plates 13a-c have an identical shape and size, and extend parallel to each other in horizontal direction, partially overlapping in the sloping direction similar to the tiles 4. The cover plates 13a-c are each formed out of a homogenous plastic or synthetic sheet with a uniform thickness, such as a sheet of polyethylene, that allows to be reformed by means of vacuum formation on a vacuum formation mould or by means of stamp pressing, whereby the cover plates 13a-c are watertight over their entire surface.

As shown in figures 2 an 3, the cover plates 13a-c have a repetitive shape in their horizontally extending, longitudinal direction, and alternately comprise elongated gutter sections 14 that continue into upwardly extending elongated mounting ribs 15 separating the gutter sections 14. The gutter sections 14 are substantially flat or slightly concave in downward direction perpendicularly to the main plane of the cover plates 13a-c, wherein the mounting ribs 15 provide the necessary bending stiffness to the cover plates over substantially the whole length of the gutter sections 14 for proper handling of the cover plates 13a-c. The elongated gutter sections 14 and the elongated mounting ribs 15 extend perpendicular to the longitudinal direction of the cover plates 13a-c, and extend per cover plate 13a-c over the full breadth.

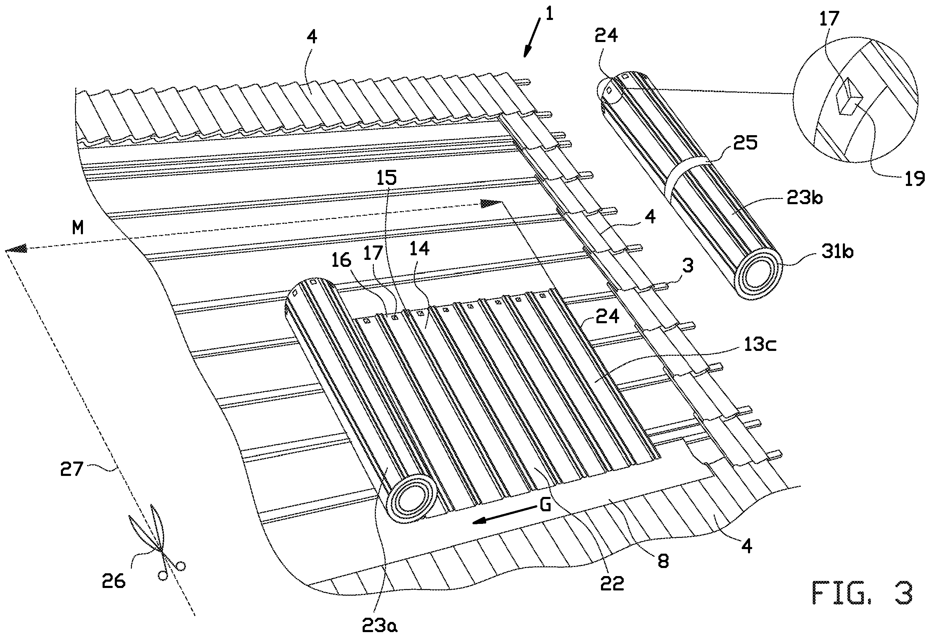

As shown in figures 2 and 3 the cover plates 13a-c are close to their longitudinal upper edge 16 provided with a series of hook notches 17 extending downwards from the middle of each of the gutter sections 14 in order to hook behind a horizontal tile batten 3 or, like the uppermost cover plate 13a, behind an additional batten 5 that has been mounted on the roof boarding 2 to obtain the correct height of the plate cover deck 12. In figure 2 only the hook notches 17 of the uppermost cover plate 13a is shown, as the other hook notches 17 are overlapped. The hook notches 17 are hollow and have been formed out of the sheet material of the gutter section 14. The hook notches comprise a hook surface 19 that extends substantially perpendicular to the main plane of the gutter sections 14, and downwardly faces the longer part of the gutter sections 14. On a distance of about one tile batten width, a downwardly extending abutment rib 56 is formed in the same manner as the hook notches 17, for confinement of the upper part of a tile batten that is engaged by the hook notch 17.

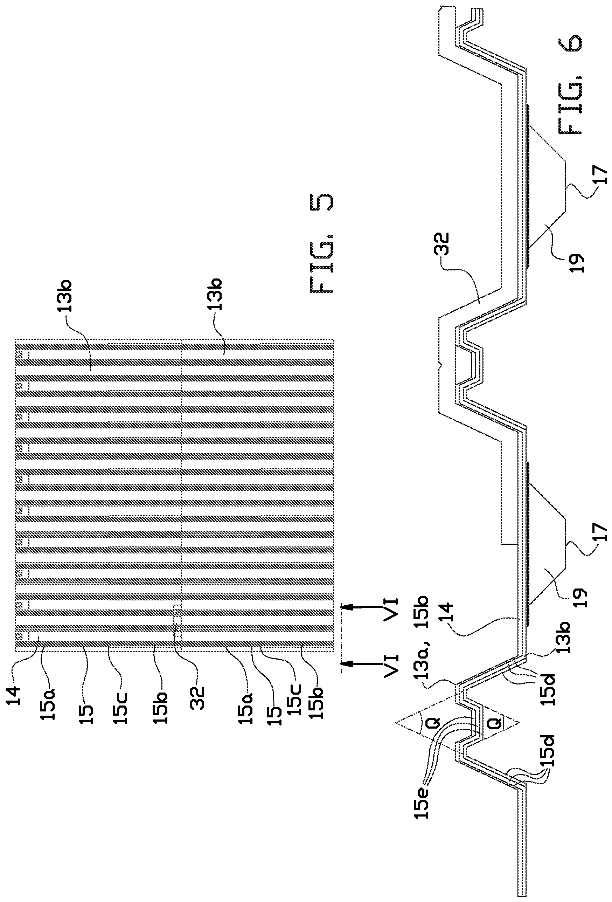

As best shown in detailed figures 5-7, the mounting ribs 15 each comprise a straight first upper half 15a with a substantially constant cross section that converts via a broadening transition 15c into a broader, straight lower half 15b with a substantially constant cross section. The broadening transition 15c is located substantially on half of the length of the mounting ribs 15. The mounting ribs 15 are open at the side facing the roof boarding 2, and the inner side of the broader lower half 15b is dimensioned such that the upper side of the smaller upper half 15a snugly nests into the broader lower half 15b, wherein the mathematical prolongation of the lower half 15b of the upper cover plate 13a-c substantially extends into the broader lower half 15b of the mounting ribs 15 of the overlapped cover plate 13a-c. This allows the partial nesting of the overlapping sections of the cover plates 13a-c in order to guide rain water downwards along the overlapping cover plates 13a-c, wherein the overlap can vary between an overlap over substantially only the row of hook notches 17 and an overlap until abutment against the broadening transition 15c.

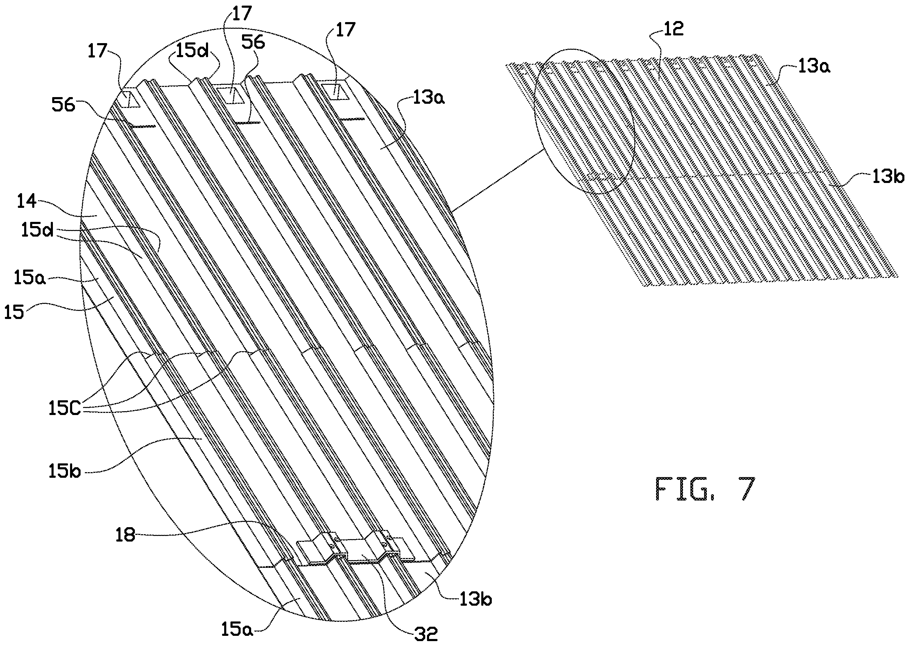

As shown in figures 6 and 7, the mounting ribs 15 each comprise two straight side flanks 15d that extend outwards from an guttered upper middle section 15d. The side flanks 15d and the flanks forming the guttered section are positioned mirror symmetric, and enclose an angle Q of 45-55 degrees, in this embodiment 50 degrees. Due to this angle Q the homogenous plastic or synthetic sheet with a uniform thickness substantially remains its uniform thickness over the formed gutter sections 13, the nesting side flanks 15d and the guttered upper middle section 15d.

As best shown in figure 2, the solar panel holder 10 comprises elongated plastic gutter profiles 7 that are partially overlapping like the tiles 4, having an upper strip 28 that extends at least above the outermost mounting rib 15 of the cover plate deck 12, and a gutter 29 that extend under the adjacent column of tiles 4. In addition, the solar panel holder 10 comprises an elongated flashing 8 that has been configured by plastically deformation such that its extends under the lower edge of the lowermost cover plate 13c and the lowest gutter profile 7, and on the other side over the lower row of tiles 4, whereby rain water can flow from the cover plate deck 12 and the gutter profiles 7 onto the lower tiles 4. The lower longitudinal edge 18 of the lowermost cover plate 13c extends in a projection perpendicular to the main plane of the solar panels 11a-f under the free lower edge 21 of the lowermost row of solar panels 11d-f or even lower, and the upper longitudinal edge 16 of the uppermost cover plate extends under the free upper edge 21 of the uppermost row of solar panels 11a-c or even higher. In the same manner the side edges 24 of the cover plates 13a-c extend under the side edges of the solar panels 11a-f or are situated further outside.

The solar panel holder 10 comprises multiple elongated coupling assemblies 30 on the plate cover deck 12. The coupling assemblies 30 are positioned such that each of the solar panels 11a-f is supported by two adjacent, parallelly extending coupling assemblies 30, whereby the coupling assemblies 30 are positioned on 1/4 and 3/4 of the length L of the solar panels 11a-f for stably supporting the solar panels 11a-f. In the shown embodiment the solar panels 11a-f are landscape oriented. Alternatively, the solar panels have a portrait orientation, wherein the supporting rails 31 extend horizontally to clamp the same longest edge 21 from aside. For that purpose the anchors 32 are then mounted in the same manner as shown, wherein instead the anchors 32 and the supporting rails 31 are mutually aligned.

The coupling assemblies comprise identical, elongated aluminum supporting rails 31 and elongated anchors 32a-c connected to the supporting rails 31. The anchors 32a-c fit over two adjacent mounting ribs 15 and are screwed onto the tile battens 3 by screws that extend though the mounting ribs 15. Into the supporting rails 31 two end clamps 50 and a middle clamp 60 have been slid and fixed, which respectively clamp a free upper or lower edge 21, and the adjacent edges 22 of the solar panels 11a-f that are placed onto the supporting rails 31.

When the roof 1 as shown is provided with the solar panel holder 10 and the solar panels 11a-f, firstly a number of rows of tiles 4 is removed from the roof boarding 2 in order to provide a rectangular outlined space for a flush positioning of the solar panels 11a-f with respect to the upper main surface of the tiles 4. This is shown in figure 3. Subsequently, the plate cover deck 12 is built up, wherein prefab cover plate material is supplied to the roof boarding as a roll 23a, kept rolled up tight by means of a binder 25. After removal of the binder 25, the roll 23a already stretches out due to its tendency towards its right stretched out condition, and is placed onto the tile battens 3 and rolled out in horizontal direction G while keeping the end edge 24 correctly positioned as indicated. The cover plate material easily hereby easily bends as the gutter sections 14 and the mounting ribs 15 extend over the full breadth of the plate material.

In this manner the lower cover plate 13c is provided, wherein an overlength is rolled out which is sufficient to make a cut 27 in the rolled out cover plate material, for example by means of a saw, knife or scissors 26. The cut 27 separates the cover plate material in order to obtain the cover plate 13c with its desired length M, which is enough to extend fully or more under the row of solar panels 11a-f to be mounted. During the roll out the hook notches 17 are hooked behind a tile batten 3. When necessary, some additional, temporary fixations are applied to keep the lower cover plate 13c in the hooked condition.

After rolling out the roll 23a for obtaining the lowermost cover plate 13c, the remainder of the roll 23b is brought back to the beginning of the lowermost cover plate 13c, and rolled out in the same manner in direction G to provide the hooked up middle cover plate 13b. The middle cover plate partially overlaps the lowermost cover plate 13c such that at least the hook notches are fully covered. In the same manner, the uppermost cover plate 13a is provided from the remainder of roll 23b. Depending on the desired length of the cover plates 13a-c and the length of the roll 23a, the cover plates 13a-c are obtained from the same initial roll 23a, or the second roll 23b is provided to the roof boarding 2 as a new roll. When the remainder 23b of the first roll 23a is not sufficient to obtain a full length of one of the cover plates 13a-c, it is possible to continue with a second roll at the place where the remainder 23b of the first roll ended, while providing a short overlap. This overlap is formed by at least two adjacent mounting ribs 15 with a gutter section 14 in between, that are placed upon each other and nested. Alternatively, three rolls 23a,b are provided which have exactly the desired length of the cover plates 13a-c.

By providing the cover plates 13a-c as a roll 23a, the number of overlaps in the rollout direction G is minimized, whereby the cover plate material can be supplied and applied in a cost effective manner. The assembly of the plate cover deck 12 is can be performed in a convenient manner, as the cover plates 13a-c can be handled and fixed, also temporarily, as one unity. This is advantageous when some wind is blowing around the roof 1 during the above described construction activities.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. Method for building a solar panel assembly on a slanted roof base, such as a slanted roof boarding (2) provided with tile battens (3), wherein the solar panel assembly comprises a solar panel holder (10) and at least two adjacent solar panels (lla-f) that are supported by the solar panel holder (10) substantially parallel to the roof base and horizontally next to each other, wherein the solar panel holder (10) comprises a plate cover deck (12) with at least one bendable, elongated cover plate (13c) that is provided with laterally extending water gutter sections (14) separated by upwardly and parallel extending elongated ribs (15), whereby the cover plate (13c) has in its longitudinal direction a bending stiffness which is lower than in its lateral direction, **characterized in that** the cover plate (13c) is made of plastic or synthetic material, wherein the cover plate (13c) extends continuously in horizontal direction under the at least two solar panels (11a-f), with the water gutter sections (14) and the elongated ribs (15) sloping downwards, wherein the method comprises supplying a first of said cover plate (13c) as a roll (23a), rolled up over its length, to the roof base, rolling out that first cover plate (13c) over the roof base in horizontal direction and at least partially fixing the first cover plate (13c) on the roof base.

2. Method according to claim 1, wherein the method comprises cutting off said first cover plate (13c) from the roll (23a).

3. Method according to claim 1 or 2, wherein the solar panel holder (10) comprises multiple elongated cover plates (13a-c), extending parallel with the upper cover plate (13b) overlapping the lower cover plate (13c), wherein the method comprises the step of supplying a second (13b) of said cover plate rolled up over its length to the roof base and rolling out the second cover plate (13b) over the roof base, partially over a longitudinally extending upper edge of said first cover plate (13c).

4. Method according to claim 3, wherein the elongated ribs (15) are hollow at their lower side that faces the roof base, wherein the method comprises aligning the elongated ribs (15) of the first and second cover plate (13c, 13b) and partially nest the elongated ribs (15) of the first cover plate (13c) into the elongated ribs (15) of the second cover plate (13b).

5. Method according to claim 3 or 4, wherein said second cover plate (13b) is formed by a rolled up and cut off remainder of the first cover plate (13c).

6. Method according to any one of the preceding claims, wherein the cover plate (13c) comprises a series of downwardly projecting hook notches (17) close to its longitudinally extending upper edge, preferably between the ribs (15), that engage behind a roof lath or tile batten (3) of the roof base, wherein the method comprises placing the hook notches (17) against the roof lath or tile batten (3) during the rolling out of that cover plate (13c).

7. Method according to any one of the preceding claims, wherein the cover plate (13c) is in itself pre-biased towards substantially its right stretched out condition.

8. Method according to any one of the preceding claims, wherein the cover plate (13c) as a roll (23a) is kept in that rolled up condition by means of a binder (25), wherein the method comprises taking off the binder (25) after supply of the roll and just before rolling out the cover plate (13c) on the roof base.

9. Method according to any one of the preceding claims, wherein the cover plate (13c) is at least substantially watertight over its entire surface.

10. Method according to any one of the preceding claims, wherein the elongated cover plate (13c) or overlapping cover plates (13a-c) are positioned over the roof base such that in a projection substantially perpendicular to the main plane of the adjacent solar panels (lla-f) the upper side and/or lower side and/or the lateral sides of the outline of the elongated cover plate or overlapping cover plates extend under or outwardly beyond the common outline of the solar panels (lla-f) to be installed.

11. Method according to any one of the preceding claims, wherein the cover plate (13c) is formed as one single unity or mono-block.

12. Method according to any one of the preceding claims, wherein the cover plate (13c) alternately comprises the elongated gutter sections (14) that continue into the upwardly extending ribs (15), wherein the gutter sections (14) and the ribs (15) preferably extend over the full lateral breadth of the cover plate (13c).

13. Method according to any one of the preceding claims, wherein the cover plate (13c) is made of polyethylene.

14. Method according to any one of the preceding claims, wherein the solar panel assembly comprises elongated coupling assemblies (30) mounted on the plate cover deck (12), wherein the method comprises mounting of the coupling assemblies (30) on the first cover plate (13c) in order to permanently fix the cover plate (13c) on the roof base.

15. Method according to claim 14, comprising coupling the solar panels (lla-f) on the coupling assemblies (30) after mounting the coupling assemblies (30) on the first cover plate (13c).

## Patentansprüche

1. Verfahren zum Aufbau einer Solarpaneelanordnung auf einer geneigten Dachbasis, wie beispielweise einer geneigten Dachverschalung (2), versehen mit Dachlatten (3), wobei die Solarpaneelanordnung einen Solarpaneelhalter (10) und mindestens zwei angrenzende Solarpaneele (lla-f) aufweist, die durch den Solarpaneelhalter (10) im Wesentlichen parallel zu der Dachbasis und horizontal zueinander abgestützt sind, wobei der Solarpaneelhalter (10) ein Plattenabdeckteil (12) mit zumindest einer biegbaren, langgestreckten Abdeckplatte (13c) aufweist, die mit seitlich vorstehenden Regenrinnen (14) versehen ist, gesondert durch aufwärts und parallel sich erstreckende Längsrippen (15), wobei die Abdeckplatte (13c) in ihrer Längsrichtung eine Biegesteifigkeit aufweist, die geringer ist als in ihrer Querrichtung, **dadurch gekennzeichnet, dass** die Abdeckplatte (13c) aus Kunststoff oder synthetischem Werkstoff besteht, wobei sich die Abdeckplatte (13c) kontinuierlich in Horizontalrichtung unter den zumindest zwei Solarpaneelen (lla-f) erstreckt, mit den Regenrinnenabschnitten (14) und den langgestreckten Rippen (15) nach unten geneigt, wobei das Verfahren aufweist eine erste der Abdeckplatten (13c) als Rolle (23a) anzuliefern, sie über ihre Länge abzurollen auf der Dachbasis, und die erste Abdeckplatte (13c) über der Dachbasis in horizontaler Richtung auszurollen und zumindest stellenweise die erste Abdeckplatte (13c) an der Dachbasis zu befestigen.

2. Verfahren nach Anspruch 1, wobei das Verfahren aufweist Schneiden der ersten Abdeckplatte (13c) von der Rolle (23a).

3. Verfahren nach Anspruch 1 oder 2, wobei der Solarpaneelhalter (10) eine Mehrzahl von langgestreckten Abdeckplatten (13a-c) aufweist, die sich parallel mit der oberen Abdeckplatte (13b) und überlappend die untere Abdeckplatte (13c) erstrecken, wobei das Verfahren den Schritt aufweist eine zweite Abdeckplatte (13b) anzuliefern abgerollt über ihre Länge auf der Dachbasis und Ausrollen der zweiten Abdeckplatte (13b) über der Dachbasis, teilweise über eine sich längs erstreckende obere Kante der ersten Abdeckplatte (13c).

4. Verfahren nach Anspruch 3, wobei die langgestreckten Rippen (15) hohl sind an ihrer Unterseite und der Dachbasis zugewandt, wobei das Verfahren aufweist Ausrichten der langgestreckten Rippen (15) der ersten und zweiten Abdeckplatte (13c, 13b) und teilweise die langgestreckten Rippen (15) der ersten Abdeckplatte (13c) in die langgestreckten Rippen (15) der zweiten Abdeckplatte (13b) einzustecken.

5. Verfahren nach den Ansprüchen 3 oder 4, wobei die zweite Abdeckplatte (13b) durch einen abgerollten und abgeschnittenen verbleibenden Teil der ersten Abdeckplatte (13c) gebildet ist.

6. Verfahren nach einem der vorhergehenden Ansprüche, wobei die Abdeckplatte (13c) eine Serie von nach unten vorragenden Hakenausformungen (17) aufweist nahe zu ihrer sich längserstreckenden oberen Kante, vorzugsweise zwischen den Rippen (15), die hinter eine Dachlatte oder Dachsparre (3) der Dachbasis greifen, wobei das Verfahren aufweist Platzieren der Hakenausformungen (17) gegen die Dachlatte oder Dachsparre (3) während des Ausrollens der Abdeckplatte (13c).

7. Verfahren nach einem der vorhergehenden Ansprüche, wobei die Abdeckplatte (13c) in sich selbst vorgespannt ist in ihrem im Wesentlichen gerade ausgestreckten Zustand.

8. Verfahren nach einem der vorhergehenden Ansprüche, wobei die Abdeckplatte (13c) als Rolle (23a) in dem aufgerollten Zustand mittels eines Binders (25) gehalten ist, wobei das Verfahren aufweist Abmachen des Binders (25) nach Lieferung der Rolle und unmittelbar vor dem Ausrollen der Abdeckplatte auf der Dachbasis.

9. Verfahren nach einem der vorhergehenden Ansprüche, wobei die Abdeckplatte (13c) zumindest im Wesentlichen wasserdicht ist über ihre gesamte Oberfläche.

10. Verfahren nach einem der vorhergehenden Ansprüche, wobei die langgestreckte Abdeckplatte (13c) oder die überlappenden Abdeckplatten (13a-c) über die Dachbasis so positioniert sind, dass in einer Projektion im Wesentlichen rechtwinklig zu einer Hauptebene der angrenzenden Solarpaneele (lla-f) die Oberseite und/oder die Unterseite und/oder die seitlichen Seiten der Außenlinie der langgestreckten Abdeckplatte oder der überlappenden Abdeckplatten sich unter oder außerhalb über die gemeinsame Außenlinie der Solarpaneele (11a-f), die einzubauen sind, hinauserstrecken.

11. Verfahren nach einem der vorhergehenden Ansprüche, wobei die Abdeckplatte (11c) als eine einzelne Einheit oder ein Monoblock gebildet ist.

12. Verfahren nach einem der vorhergehenden Ansprüche, wobei die Abdeckplatte (13c) alternativ aufweist die langgestreckten Rinnenabschnitte (14), die sich in die sich nach oben erstreckenden Rippen fortsetzen, wobei die Rinnenabschnitte (14) und die Rippen (15) vorzugsweise sich über die gesamte seitliche Breite der Abdeckplatte (13c) erstrecken.

13. Verfahren nach einem der vorhergehenden Ansprüche, wobei die Abdeckplatte (13c) aus Polyethylen besteht.

14. Verfahren nach einem der vorhergehenden Ansprüche, wobei die Solarpaneelanordnung langgestreckte Kupplungseinheiten (30) aufweist, die an dem Plattenabdeckteil (12) angebracht sind, wobei das Verfahren aufweist Anbringen der Kupplungseinheiten (30) an der ersten Abdeckplatte (13c), um die Abdeckplatte (13c) permanent an der Dachbasis zu befestigen.

15. Verfahren nach Anspruch 14, wobei das Kuppeln der Solarpaneele (lla-f) an den Kupplungseinheiten (30) nach dem Anbringen der Kupplungseinheiten (30) an der ersten Abdeckplatte (13c) erfolgt.

## Revendications

1. Procédé pour construire un ensemble de panneaux solaires sur une base de toit inclinée, telle qu'une sous-toiture inclinée (2) prévue avec des voliges de tuiles (3), dans lequel l'ensemble de panneaux solaires comprend un support de panneaux solaires (10) et au moins deux panneaux solaires (11a-f) adjacents qui sont supportés par le support de panneaux solaires (10) sensiblement parallèlement à la base de toit et horizontalement l'un à côté de l'autre, dans lequel le support de panneaux solaires (10) comprend une plateforme de recouvrement à plaque (12) avec au moins une plaque de recouvrement (13c) allongée, pliable, qui est prévue avec des sections de gouttière (14) s'étendant latéralement séparées par des nervures (15) allongées s'étendant parallèlement et vers le haut, moyennant quoi la plaque de recouvrement (13c) a, dans sa direction longitudinale, une rigidité au pliage qui est inférieure par rapport à sa direction latérale, **caractérisé en ce que** la plaque de recouvrement (13c) est réalisée à partir de matière plastique ou de matériau synthétique, dans lequel la plaque de recouvrement (13c) s'étend de manière continue dans la direction horizontale sous les au moins deux panneaux solaires (11a-f), avec les sections de gouttière (14) et les nervures allongées (15) qui s'inclinent vers le bas, dans lequel le procédé comprend les étapes suivantes : fournir une première de ladite plaque de recouvrement (13c) sous la forme d'un rouleau (23a), enroulé sur sa longueur, à la base de toit, dérouler cette première plaque de recouvrement (13c) sur la base de toit dans la direction horizontale et fixer au moins partiellement la première plaque de recouvrement (13c) sur la base de toit.

2. Procédé selon la revendication 1, dans lequel le procédé comprend l'étape consistant à : couper ladite première plaque de recouvrement (13c) du rouleau (23a) .

3. Procédé selon la revendication 1 ou 2, dans lequel le support de panneaux solaires (10) comprend plusieurs plaques de recouvrement (13a-c) allongées, s'étendant parallèlement à la plaque de recouvrement supérieure (13b) recouvrant la plaque de recouvrement inférieure (13c), dans lequel le procédé comprend l'étape suivante : fournir une seconde (13b) de ladite plaque de recouvrement déroulée sur sa longueur à la base de toit et déroulée la seconde plaque de recouvrement (13b) sur la base de toit, partiellement sur un bord supérieur s'étendant de manière longitudinale de ladite première plaque de couvercle (13c) .

4. Procédé selon la revendication 3, dans lequel les nervures allongées (15) sont creuses au niveau de leur côté inférieur qui fait face à la base de toit, dans lequel le procédé comprend l'étape suivante :
aligner les nervures allongées (15) des première et seconde plaques de recouvrement (13c, 13b) et emboîter partiellement les nervures allongées (15) de la première plaque de recouvrement (13c) dans les nervures allongées (15) de la seconde plaque de recouvrement (13b) .

5. Procédé selon la revendication 3 ou 4, dans lequel ladite seconde plaque de recouvrement (13b) est formée par un reste enroulé et coupé de la première plaque de recouvrement (13c).

6. Procédé selon l'une quelconque des revendications précédentes, dans lequel la plaque de recouvrement (13c) comprend une série d'encoches de crochet (17) en saillie vers le bas à proximité de leur bord supérieur s'étendant longitudinalement, de préférence entre les nervures (15) qui se mettent en prise derrière un liteau de toit ou une volige de tuiles (3) de la base de toit, dans lequel le procédé comprend l'étape suivante : placer les encoches de crochet (17) contre le liteau de toit ou la volige de tuiles (3) pendant le déroulement de cette plaque de recouvrement (13c).

7. Procédé selon l'une quelconque des revendications précédentes, dans lequel la plaque de recouvrement (13c) est d'elle-même pré-sollicitée sensiblement vers son état tendu droit.

8. Procédé selon l'une quelconque des revendications précédentes, dans lequel la plaque de recouvrement (13c) en tant que rouleau (23a), est maintenue dans cette condition enroulée au moyen d'une liaison (25), dans lequel le procédé comprend l'étape suivante : retirer la liaison (25) après la fourniture du rouleau et juste avant le déroulement de la plaque de recouvrement (13c) sur la base de toit.

9. Procédé selon l'une quelconque des revendications précédentes, dans lequel la plaque de recouvrement (13c) est au moins sensiblement imperméable sur toute sa surface.

10. Procédé selon l'une quelconque des revendications précédentes, dans lequel la plaque de recouvrement (13c) allongée ou les plaques de recouvrement (13a-c) chevauchantes sont positionnées sur la base de toit de sorte que dans une saillie sensiblement perpendiculaire au plan principal des panneaux solaires (lla-f) adjacents, le côté supérieur et/ou le côté inférieur et/ou les côtés latéraux du contour de la plaque de recouvrement allongée ou des plaques de recouvrement chevauchantes s'étendent sous ou vers l'extérieur au-delà du contour commun des panneaux solaires (lla-f) à installer.

11. Procédé selon l'une quelconque des revendications précédentes, dans lequel la plaque de recouvrement (13c) est formée sous la forme d'une unité unique ou monobloc.

12. Procédé selon l'une quelconque des revendications précédentes, dans lequel la plaque de recouvrement (13c) comprend en variante, les sections de gouttière (14) allongées qui continuent dans les nervures (15) s'étendant vers le haut, dans lequel les sections de gouttière (14) et les nervures (15) s'étendent de préférence sur toute la largeur latérale de la plaque de recouvrement (13c).

13. Procédé selon l'une quelconque des revendications précédentes, dans lequel la plaque de recouvrement (13c) est réalisée à partir de polyéthylène.

14. Procédé selon l'une quelconque des revendications précédentes, dans lequel l'ensemble de panneaux solaires comprend des ensembles de couplage (30) allongés montés sur la plateforme de recouvrement à plaque (12), dans lequel le procédé comprend l'étape suivante : monter les ensembles de couplage (30) sur la première plaque de recouvrement (13c) afin de fixer de manière permanente la plaque de recouvrement (13c) sur la base de toit.

15. Procédé selon la revendication 14, comprenant l'étape suivante : coupler les panneaux solaires (11a-f) sur les ensembles de couplage (30) après avoir monté les ensembles de couplage (30) sur la première plaque de recouvrement (13c).
